# EUROPEAN PATENT SPECIFICATION

(11) **EP 2 388 769 B1**
(45) Date of publication and mention of the grant of the patent: **06.01.2016**
(21) Application number: 10192544.4
(22) Date of filing: 25.11.2010
(51) Int. Cl.: G09G 3/20

(54) **Image processing method and display device using the same**
Bildverarbeitungsverfahren und Anzeigevorrichtung damit
Procédé de traitement d'images et dispositif d'affichage l'utilisant

(30) Priority: 20.05.2010 KR 20100047628
(43) Date of publication of application: 23.11.2011
(73) Proprietor: LG Display Co., Ltd., Seoul 150-721 (KR)
(72) Inventor: Park, Byunghwee, 700-818, Daegu (KR); Lee, Namyang, 463-410, Gyeonggi-do (KR); Credelle, Thomas Lloyd, Morgan Hill, CA95037 (US)
(74) Representative: Ter Meer Steinmeister & Partner

(56) References cited:
- WO-A1-03/060870
- US-A1- 2003 085 906

## Description

This application claims the benefit of Korea Patent Application No. 10-2010-0047628 field on May 20, 2010, which is incorporated herein by reference for all purposes as if fully set forth herein.

### BACKGROUND

### Field

This document relates to an image processing method and a display device using the same.

### Related Art

Known display devices include a cathode ray tube, a liquid crystal display (LCD), an organic light emitting diode (OLED), a plasma display panel (PDP), etc. Such a display device has as many sub-pixels of red (R), green (G), and blue (B), respectively, as the maximum number of pixels of an image that can be displayed.

In recent years, in order to achieve power consumption reduction and high resolution in a display device, a technology for reproducing an image close to the original image using pixels whose number is smaller than the resolution of an input image was proposed in US Patent No. 7492379, etc.

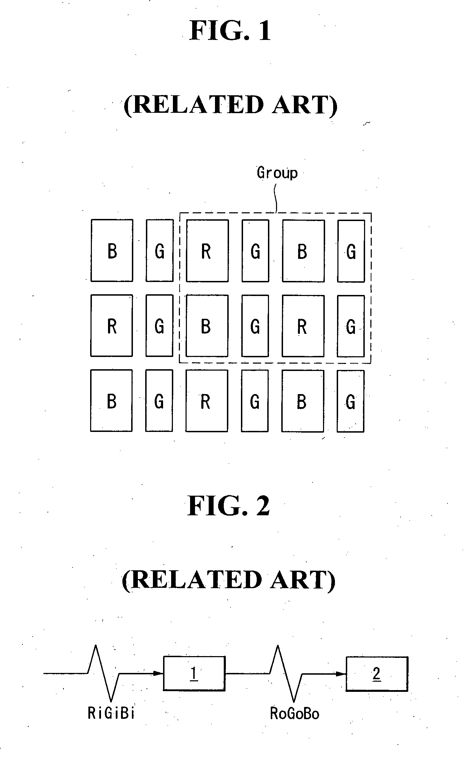

In this technology, there are as many G sub-pixels as the actual display resolution and as many R and B sub-pixels, respectively, as half the actual display resolution. In other words, as shown in FIG. 1, this technology provides sub-pixel groups, each sub-pixel group comprising eight sub-pixels: four G sub-pixels; two R sub-pixels; and two B sub-pixels, and repeating in a checkerboard pattern. An R sub-pixel and a G sub-pixel constitute one unit pixel, and a B sub-pixel and a G sub-pixel constitute one unit pixel. Input R, G, and B data RGBi is image-processed into data RGBo corresponding to a pixel array of a display device 2 by a sub-pixel rendering block (SPR) 1. At this point, the SPR block 1 renders all input RGB data RGBi.

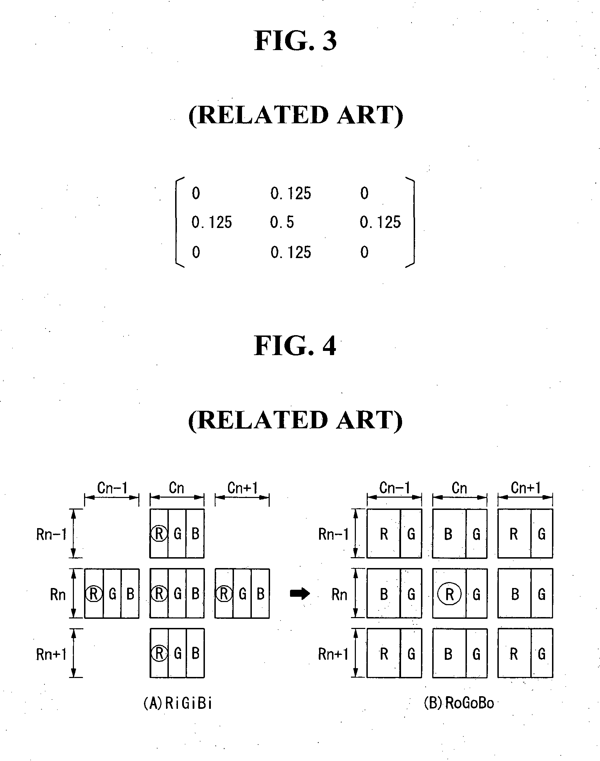

This technology uses a diamond filter as shown in FIG. 3 to determine gray scale values of sub-pixels using five sub-pixel values. The weighted value of the central portion of the diamond filter is set to 0.5, and the upper, lower, left, and right peripheral portions surrounding the central portion are respectively set to 0.125. As shown in FIG. 4, in order to determine the R data value Ro of a pixel provided at the intersection of an n-th column Cn and an n-th row Rn, a weighted value of 0.5 applies to the R data value Ri of a pixel provided at the intersection of the n-th column Cn and the n-th row Rn, and a weighted value of 0.125 applies to the R data value Ri of a pixel provided at the intersection of the n-th column Cn and an (n-1) -th row Rn-1, the R data value Ri of the pixel provided at the intersection of the n-th column Cn and an (n+1)-th row Rn+1, the R data value Ri of a pixel provided at the intersection of an (n-1)-th column Cn-1 and an n-th row Rn, and the R data value Ri of a pixel provided at the intersection of an (n+1)-th column Cn+1 and the n-th row Rn, respectively. The same method applies to determine G and B data values Go and Bo.

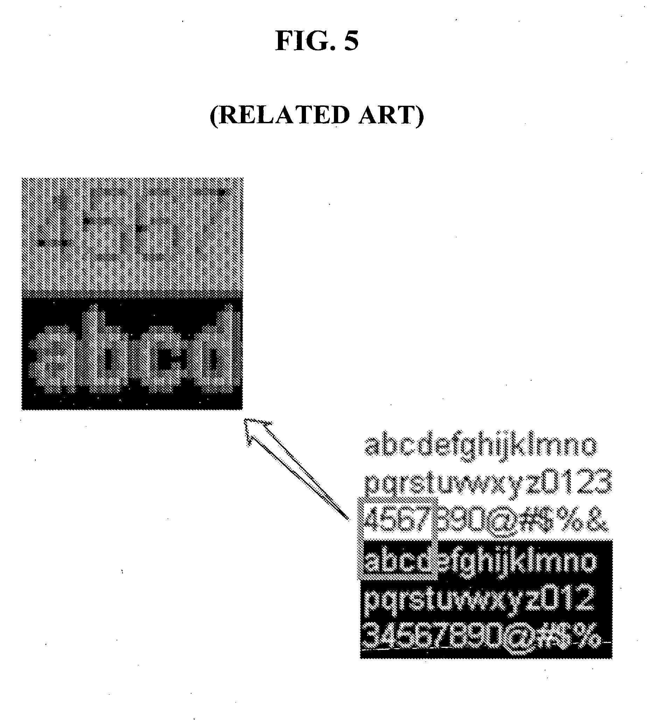

However, such a conventional technology is an algorithm that was developed when a display device which can be actually manufactured has a low resolution. A computational process of this algorithm is complicated because R, G, and B data are all filtered to prevent degradation of a display image. As a result, the degree of reduction of power consumption is small in the actual implementation of a driver IC. Moreover, a color error occurs in a display image due to the diamond filter used for image processing and the sharpness processing using G data, and blurring of the contour of the display image occurs as shown in FIG. 5. Further, as is evident in FIG. 4, particular rows and two rows vertically adjacent thereto are required to determine data values of pixels arranged in the corresponding particular rows, so a minimum of three line memories have to be provided. An increase in line memories causes an increase in product unit cost.

WO 03/060870 A1 describes color flat panel display sub-pixel arrangements. An arrangement may include sub-pixel octal groupings. Each grouping may have three-color sub-pixels with one colored sub-pixel comprising twice the number of positions within the octal sub-pixel grouping as the other two colored sub-pixels. Further, a data format conversion method is disclosed. The method may comprise edge detection by subtracting adjacent color data and comparing the difference with a predetermined number. If an edge is detected, data are outputted to a display after performing e.g. filtering using box filters or 2x3 kernels.

US 2003/0085906 A1 describes data processing for a display. The processing comprises edge detection followed by sharpening. If an edge is detected, sharpening is performed using a sharpening filter.

### SUMMARY

An object of this document is to provide an image processing method, which can improve display quality level and reduce the processing cost of a product when implementing a display image using a number of pixels smaller than the resolution of an input image. This object is solved by the features of the independent claims.

To achieve the above advantages, one exemplary embodiment of the present invention provides an image processing method, in which three primary color data of an input RGB data format are rendered on a display panel according to a sub-pixel structure of the display panel, the display panel having as many G sub-pixels as the display resolution of input G data and as many R and B sub-pixels as half the display resolution of input R and B data, respectively, the method preferably comprising: (A) separating the R and B data and the G data from the input data; (B) loading data corresponding to respective odd rows of the gamma-converted R and B data, and storing data corresponding to respective even rows of the R and B data adjacent to the loaded odd rows; (C) loading two R data of the even row, along with two R data of the odd row corresponding to a first display position, so as to form a 2x2 R pixel area, and loading two B data of the even row, along with two B data of the odd row corresponding to a second display position, so as to form a 2x2 B pixel area; (D) computing the sharpness of the corresponding display data by comparing the data in each of the R and B pixel areas column by column and row by row; (E) computing the luminance of the display data by taking the average value of the data corresponding to the odd row of each of the R and B pixel areas; (F) determining the gray scale value of output R data by adding the sharpness to the luminance of the R data, and determining the gray scale value of output B data by adding the sharpness to the luminance of the B data; and (G) combining the inverse-gamma-converted R and B data and the input G data and then outputting the combined data according to the sub-pixel structure of the display panel.

The (D) comprises: (D1) determining the logic values of first and second flag bits by comparing the data in each of the R and B pixel areas column by column with reference to a preset threshold value; and (D2) computing the sharpness of the corresponding display data using the difference between the data in each row of each of the R and B pixel areas and a preset level value based on the logic values of the first and second flag bits.

In the (D1), if a comparison value between the data in each column is less than the preset threshold value, the logic values of the first and second flag bits are determined as HIGH, whereas, if the comparison value is greater than the preset threshold value, the logic values of the first and second flag bits are determined as LOW; and, in the (D2), if the logic value of at least one of the first and second flag bits is HIGH, the corresponding Rand B pixel areas are detected as a vertical edge for sharpness filtering, and then the number of bits of the data of the corresponding R/B pixel area is extended from M bits to N bits (N>M).

This image processing method further comprises: if the logic values of the first and second flag bits are all LOW, extending the number of bits of the data corresponding to the odd row of each of the R and B pixel areas from M bits to N bits between the (D) and the (E); and restoring the number of bits of the output R/B data whose gray scale value is determined from N bits to M bits between the (F) and the (G).

This image processing method further comprises: gamma-converting the separated R and B data between the (A) and the (B); and inverse-gamma-converting the output R and B data between the (F) and the (G).

The sharpness is obtained by dividing the sum of the differences between the data in each row of each of the R and B pixel areas by 2 and multiplying the level value to the result of the division.

In the display panel, a first pixel comprising an R sub-pixel and a G sub-pixel and a second pixel comprising a B sub-pixel and a G sub-pixel are arranged in a checkerboard pattern; and the (D) is omitted for R and B data columns whose display position is defined between the outermost non-display area of the display panel and a G data column.

In the (D), the maximum level value is applied to the R and B data columns whose display position faces the outermost non-display area of the display panel with the G data column interposed therebetween.

One exemplary embodiment of the present invention provides a display device, preferably comprising: a display panel having as many G sub-pixels as the display resolution of input G data and as many R and B sub-pixels as half the display resolution of input R and B data, respectively; a gamma conversion unit for gamma-converting the R and B data separated from input data; a memory for storing data corresponding to respective even rows of the R and B data adjacent to the loaded odd rows line by line when loading data corresponding to respective odd rows of gamma-converted R and B data; a first filtering unit for loading two R data of the even row, along with two R data of the odd row corresponding to a first display position, so as to form a 2x2 R pixel area, loading two B data of the even row, along with two B data of the odd row corresponding to a second display position, so as to form a 2x2 B pixel area, and computing the sharpness of the corresponding display data by comparing the data in each of the R and B pixel areas column by column and row by row; a second filtering unit for computing the luminance of the display data by taking the average value of the data corresponding to the odd row of each of the R and B pixel areas, determining the gray scale value of output R data by adding the sharpness to the luminance of the R data, and determining the gray scale value of output B data by adding the sharpness to the luminance of the B data; an inverse-gamma-conversion unit for inverse-gamma-converting the output R and B data; and a data alignment unit for combining the inverse-gamma-converted R and B data and the input G data and then outputting the combined data according to the sub-pixel structure of the display panel.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a view showing a conventional pixel configuration;
FIG. 2 is a view schematically showing a configuration for rendering data into a pixel array of FIG. 1;
FIG. 3 is a view showing a diamond filter used for the rendering of FIG. 2;
FIG. 4 is a view showing one example of rendering;
FIG. 5 is a view showing the blurring of the contour of a display image according to the conventional art;
FIG. 6 is a view sequentially showing an image processing method according to an exemplary embodiment of the present invention;
FIG. 7 is a view showing a 2x2 R pixel area and a 2x2 B pixel area;
FIG. 8 is a view illustratively showing a plurality of threshold values and level values;
FIG. 9 is a view showing the rearrangement and outputting of output data according to a pixel structure of a display panel;
FIG. 10 is a view for explaining a case where a sharpness filtering process is omitted or a level value applied to the sharpness filtering process is set to a maximum value;
FIG. 11 is a view showing an improvement in display quality level according to the present invention;
FIG. 12 shows a display device according to an exemplary embodiment of the present invention; and
FIG. 13 shows an image processing circuit of FIG. 12 in detail.

### DETAILED DESCRIPTION

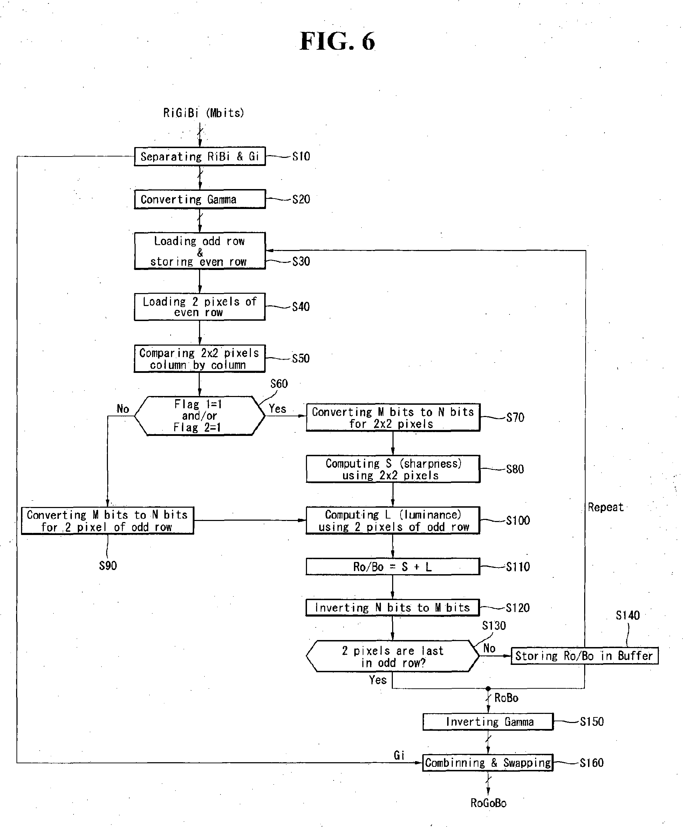

Hereinafter, an implementation of this document will be described in detail with reference to FIGS. 6 to 13.

First, an image processing method of the present invention will be described through FIGS. 6 to 11.

FIG. 6 sequentially shows an image processing method according to an exemplary embodiment of the present invention.

Referring to FIG. 6, this image processing method is carried out on a display panel whose number of pixels is smaller than the resolution of an input image. In the display panel according to the present invention, there are as many G sub-pixels as the display resolution of input G data and as many R and B sub-pixels as half the display resolution of input R and B data, respectively. In other words, as shown in FIG. 1, the display panel according to the present invention has sub-pixel groups, each sub-pixel group comprising eight sub-pixels: four G sub-pixels; two R sub-pixels; and two B sub-pixels, and repeating in a checkerboard pattern. An R sub-pixel and a G sub-pixel constitute one unit pixel, and a B sub-pixel and a G sub-pixel constitute one unit pixel. In the display panel, a first pixel comprising an R sub-pixel and a G sub-pixel and a second pixel comprising a B sub-pixel and a G sub-pixel are arranged in a checkerboard pattern.

In order to render three primary-color data RiGiBi of an input RGB data format according to a sub-pixel structure of the display panel, in this image processing method, R and B data RiBi and G data Gi are separated from the input data RiGiBi of M bits (M is a natural number) (S10). Then, the separated R and B data RiBi is gamma-converted using any one of preset gamma curves of 1.8 to 2.2 (S20). By this gamma conversion, the R and B data RiBi is converted into a linear value.

In this image processing method, data corresponding to odd rows of the gamma-converted R and B data RiBi is loaded to a register for temporary storage of data, and data corresponding to even rows of R and B data RiBi adjacent to below the loaded odd rows is stored using one line memory (S30).

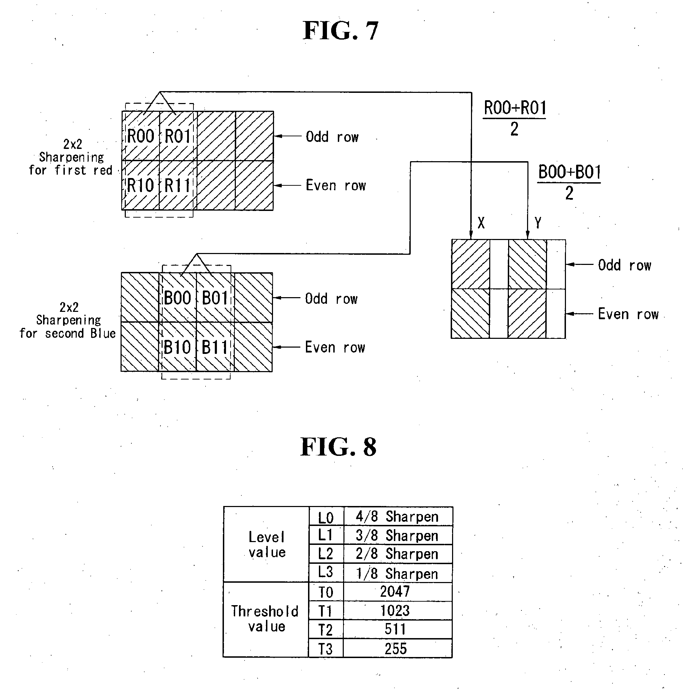

In this image processing method, as shown in FIG. 7, two R data R10 and R11 of the even row, along with two R data R00 and R01 of the odd row corresponding to a display position X, is loaded to a register so as to form a 2x2 R pixel area. Moreover, two B data B10 and B11 of the even row, along with two B data B00 and B01 of the odd row corresponding to a display position Y, is loaded to the register so as to form a 2x2 B pixel area (S40).

In this image processing method, the logic values of first and second flag bits are determined by comparing the data in each of the R and B pixel areas column by column (S50). In this image processing method, if a comparison value between the data in each column of each of the R and B pixel areas is less than a preset threshold value, the logic values of the flag bits are determined as HIGH ('1'), whereas, if the comparison value is greater than the preset threshold value, the logic values of the flag bits are determined as LOW ('0'). Here, the threshold value may be preset to any one of a plurality of threshold values TO~T3 shown in FIG. 8. For example, in this image processing method, if |R00-R10| in the 2x2 R pixel area is less than the preset threshold value, the logic value of the first flag bit is determined as '1', and if |R01-R11| is less than the preset threshold value, the logic value of the second flag bit is determined as '1'. Moreover, if |B00-B10| in the 2x2 B pixel area is less than the preset threshold value, the logic value of the first flag bit is determined as '1', and if |B01-B11| is less than the preset threshold value, the logic value of the second flag bit is determined as '1'.

In this image processing method, the logic value of at least one of the first and second flag bits is '1' (Yes of S60), the corresponding Rand B pixel areas are detected as a vertical edge for sharpness filtering. And, the number of bits of the data of each of the corresponding R/B pixel area is extended from M bits to N bits (N>M) (S70). Here, 'M' may be '8', and 'N' may be '12'.

In this image processing method, sharpness S is computed using the difference between the data in each row of each of the corresponding R and B pixel areas and a preset level value (S80). The level value may be preset to any one of a plurality of level values L0 to L3 shown in FIG. 8. In the R pixel area, the difference between the data in each row is computed as ┌even row=R00-R01 and ┌odd row=R10-R11. Here, '┌' denotes a mathematical operator indicating ceiling. As a result, the sharpness Sr in the R pixel area is computed by {level value * (┌even row + ┌odd row)/2}. In the B pixel area, the difference between the data in each row is computed as ┌even row=B00-B01 and ┌odd row=B10-B11. As a result, the sharpness Sb in the B pixel area is computed by {level value * (┌even row + ┌odd row)/2}.

In this image processing method, if the logic value of the first flag bit and the logic value of the second flat bit are all '0' (No of S60), the number of bits of the data corresponding to the odd row of each of the R and B pixel areas is extended from M bits to N bits without the sharpness processing shown in S70 and S80 (S90).

In this image processing method, considering that the number of pixels of the display panel is half compared to the input image of R and B, the luminance L of display data is computed by taking the average value of the data corresponding to the odd row of each of the R and B pixel areas as shown in FIG. 7 (S100). For example, in FIG. 7, the luminance Lr of R data to be displayed at the X position of the display panel is computed by (R00+R01)/2, and the luminance Lb of B data to be displayed at the Y position of the display panel is computed by (B00+B01)/2. Such a 2x1 simple filtering scheme provides a higher image processing speed because the computation is simplified compared to a conventional diamond filter requiring a complicated computation. Moreover, this scheme is very effective to reduce power consumption since the computation load is reduced.

In this image processing method, the gray scale value of output R data Ro is determined by adding the sharpness Sr to the luminance Lr of the R data, and the gray scale value of output B data Bo is determined by adding the sharpness Sb to the luminance Lb of the B data (S110). And, the number of bits of the output R/B data whose gray scale value is determined is restored from N bits to the original M bits (S120).

In this image processing method, if each of the R and B pixel areas is not the last area of the odd row (No of S130), the gray scale value Ro/Bo of S120 is stored in a buffer and fed back to S30, and then the steps S30 to S120 are repeated until the last area of the odd row. On the contrary, if each of the R and B pixel areas is the last area of the odd row (Yes of S130), all the output R and B data Ro and Bo of the odd rows stored in the buffer are inverse-gamma-converted through the reverse process of S20 (S150).

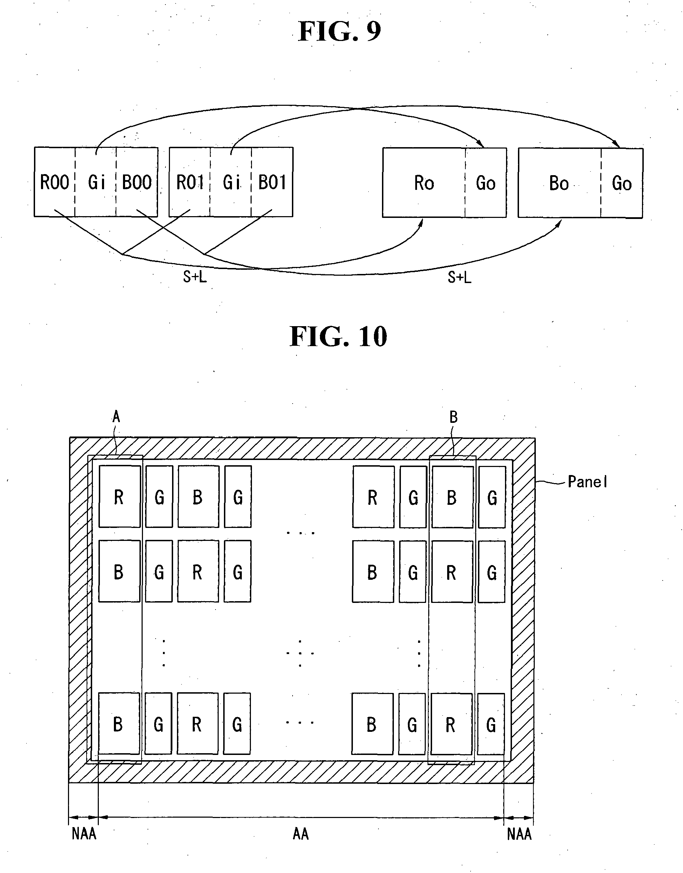

In this image processing method, the inverse-gamma-converted output R and B data Ro and Bo and the input G data Gi are combined, and then the combined output data RoGoBo is output according to the pixel structure of the display panel as shown in FIG. 9 (S160). The image processing method explained in S10 to S160 is carried out on the data corresponding to all the rows in accordance with a row sequential-method.

Meanwhile, as shown in "A" of FIG. 10, the sharpness filtering process explained in S70 and S80 may be omitted for R and B data columns whose display position is defined between the outermost non-display area NAA of the display panel and a G data column of a display area AA. As sharpness filtering serves to increase luminance, if the sharpness filtering is performed in the "A" position, a purple color produced by mixing the R color and the B color may be recognized as a line in contrast with the non-display area NAA. If the sharpness filtering is skipped for the "A" position, such a side effect is significantly reduced.

Moreover, as for the level value applied to the sharpness filtering process explained in S70 and S80, as shown in "B" of FIG. 10, the maximum level value (e.g., L0 of FIG. 8) can be applied to the R and B data columns whose display position faces the outermost non-display area NAA of the display panel with the G data column interposed therebetween. By thusly reinforcing the sharpness filtering for the R and B data column positioned in "B", a greenish phenomenon caused by the G data column adjoining the outermost non-display area NAA can be greatly alleviated.

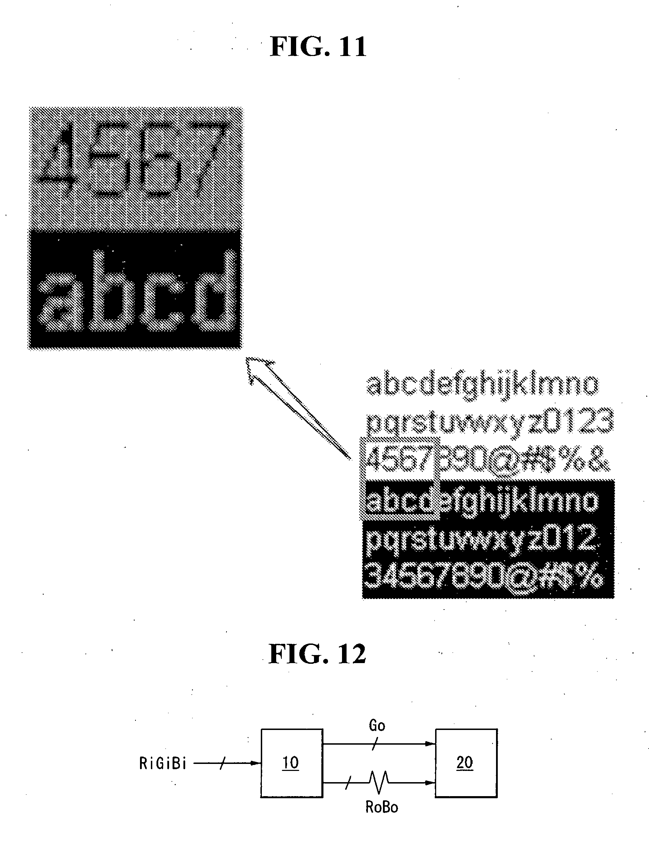

As described above, the image processing method according to the exemplary embodiment of the present invention is an algorithm targeting high resolution, in which filtering is only applied to R and B data, but not to G data. Particularly, the 2x1 simple filtering scheme is used for image processing, and no sharpness filtering is performed for G data at all, so power consumption can be reduced. Also, as shown in FIG. 11, the present invention can achieve a display image of a fairly good state without color errors and blurring of the contour of the image. Further, one line memory is sufficient to implement the present invention, unlike the conventional art requiring a minimum of three line memories, thus greatly reducing the product unit cost.

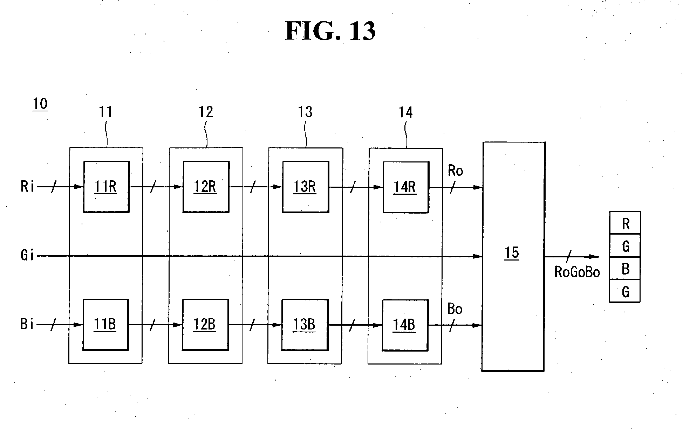

Next, a display device of the present invention will be described through FIGS. 12 and 13.

FIG. 12 shows a display device according to an exemplary embodiment of the present invention. FIG. 13 shows an image processing circuit of FIG. 12 in detail.

Referring to FIG. 12, this display device comprises an image processing circuit 10 and a display element 20.

The display element 20 comprises a display panel, a timing controller, a data driver, and a scan driver. This display element 20 can be implemented as a liquid crystal display (LCD), a field emission display (FED), a plasma display panel (PDP), an organic light emitting diode (OLED), etc.

In the display panel, a plurality of data lines and a plurality of gate lines are arranged so as to cross each other, and sub-pixels are formed at the crossings thereof. The number of pixels of the display panel is smaller than the resolution of an input image. In this display panel, there are as many G sub-pixels as the display resolution of input G data and as many R and B sub-pixels as half the display resolution of input R and B data, respectively. In other words, as shown in FIG. 1, the display panel according to the present invention has sub-pixel groups, each sub-pixel group comprising eight sub-pixels: four G sub-pixels; two R sub-pixels; and two B sub-pixels, and repeating in a checkerboard pattern. An R sub-pixel and a G sub-pixel constitute one unit pixel, and a B sub-pixel and a G sub-pixel constitute one unit pixel. In the display panel, a first pixel comprising an R sub-pixel and a G sub-pixel and a second pixel comprising a B sub-pixel and a G sub-pixel are arranged in a checkerboard pattern.

The timing controller receives a plurality of timing signals from a system and generates control signals for controlling the operation timings of the data driver and the scan driver. The control signals for controlling the scan driver include a gate start pulse (GSP), a gate shift clock GSC, a gate output enable signal (GOE), etc. The control signals for controlling the data driver include a source start pulse (SSP), a source sampling clock (SSC), a polarity control signal (POL), a source output enable signal (SOE), etc. The timing controller supplies output R, G, and B data Ro, Go, and Bo from the image processing circuit 10 to the data driver.

The data driver comprises a plurality of source drive integrated circuits (source drive ICs), and latches digital video data RoGoBo under the control of the timing controller. The data driver converts the digital video data RoGoBo into an analog positive/negative data voltage and supplies it to the data lines of the display panel. The number of output channels of the source drive ICs is reduced by 1/3, compared to when R, G, and B sub-pixels are formed into one unit pixel by the above-described sub-pixel configuration of the display panel. As a result, the unit cost of parts can be lowered by chip size reduction.

The scan driver comprises one or more gate drive IC, and sequentially supplies a scan pulse (or gate pulse) to the gate lines of the display panel. In a Gate-In-Panel (GIP) method, the scan driver may comprise a level shifter mounted on a control board and a shift register formed on the display panel.

The image processing circuit 10 comprises, as shown in FIG. 13, a gamma conversion unit 11, a first filtering unit 12, a second filtering unit 13, an inverse-gamma conversion unit 14, and a data alignment unit 15.

The gamma conversion unit 11 gamma-converts R and B data RiBi separated from input data RiGiBi using any one of preset gamma curves of 1.8 to 2.2, and then supplies it to the first filtering unit 12. The gamma conversion unit 11 comprises an R gamma conversion unit 11R for gamma-converting the R data Ri and a B gamma conversion unit 11B for gamma-converting the B data Bi.

The first filtering unit 12 loads two data of an even row stored in a line memory, along with two data of an odd row corresponding to a corresponding display position is loaded to a register so as to form a 2x2 pixel area. The first filtering unit 12 determines the logic values of first and second flag bits by comparing the data in each of the R and B pixel areas column by column. Thereafter, if the logic value of at least one of the first and second flat bits is '1', the corresponding pixel area is detected as a vertical edge for sharpness filtering. Then, by using the 2x2 pixel area as a sharpness filter, sharpness S is computed using the difference between the data in each row of each of the corresponding pixel areas and a preset level value, and then supplied to the second filtering unit 13. The first filtering unit 12 comprises a first R filtering unit 12R for computing the sharpness of R data Ri and a first B filtering unit 12B for computing the sharpness of B data Bi.

Considering that the number of pixels of the display panel is half compared to the input image of R and B, the second filtering unit 13 computes the luminance L of display data by taking the average value of the data corresponding to the odd row of each of the R and B pixel areas. Such a 2x1 simple filtering scheme provides a higher image processing speed because the computation is simplified compared to a conventional diamond filter requiring a complicated computation. Moreover, this scheme is very effective to reduce power consumption since the computation load is reduced. The second filtering unit 13 determines the gray scale value of output R data Ro by adding sharpness to the luminance of the R data, and determines the gray scale value of output B data Bo by adding sharpness to the luminance of the B data, and then supplies them to the inverse-gamma conversion unit 14. The second filtering unit 13 comprises a second R filtering unit 13R for computing the luminance of display data in the R pixel area and then determining the gray scale value of output R data Ro by adding sharpness to the luminance of the R data and a second B filtering unit 13B for computing the luminance of display data in the B pixel area and then determining the gray scale value of output B data Bo by adding sharpness to the luminance of the B data.

The inverse-gamma conversion unit 14 gamma-converts the output R and B data Ro and Bo and then supplies it to the data alignment unit 15. The inverse-gamma conversion unit 14 comprises an R inverse-gamma conversion unit 14R for inverse-gamma-converting the output R data Ro and a B inverse gamma conversion unit 14B for inverse-gamma-converting the output B data Bo.

The data alignment unit 15 combines the inverse-gamma-converted output R and B data Ro and Bo and the input G data Gi, and then outputs the combined output data according to the pixel structure of the display panel.

As described above, in the image processing method and the display device using the same according to the exemplary embodiment of the present invention, the 2x1 simple filtering scheme is used for R and B data for image processing, and no sharpness filtering is performed for G data at all, so power consumption can be reduced and display quality level can be greatly improved. Further, one line memory is sufficient to implement the image processing method and the display device using the same according to the present invention, unlike the conventional art requiring a minimum of three line memories, thus greatly reducing the product unit cost.

Further, exemplary embodiments of the present invention have been described, which should be considered as illustrative, and various changes and modifications can be made without departing from the technical scope of the present invention. Accordingly, the scope of the present invention should not be limited by the exemplary embodiments, but should be defined by the appended claims and equivalents.

## Claims

1. An image processing method, in which three primary color data of an input RGB data format are rendered on a display panel according to a sub-pixel structure of the display panel, the display panel having as many G sub-pixels as the display resolution of the input G data and as many R and B sub-pixels as half the display resolution of the input R and B data, respectively, the method comprising:
(A) separating (S10) the R and B data and the G data from the input data;
(B) gamma-converting (S20) the separated R and B data, and loading (S30) data corresponding to respective odd rows of gamma-converted R and B data to a register, and storing data corresponding to respective even rows of the R and B data adjacent to the loaded odd rows;
(C) loading (S40) two R data of the even row, along with two R data of the odd row corresponding to a first display position, so as to form a 2x2 R pixel area, and loading two B data of the even row, along with two B data of the odd row corresponding to a second display position, so as to form a 2x2 B pixel area;
(D1) determining (S50) the logic values of first and second flag bits by comparing the value corresponding to the absolute difference between the data in each of the R and B pixel areas column by column to a preset threshold value,
wherein, if a comparison value between the data in each column is less than the preset threshold value, the logic values of the first and second flag bits are determined as HIGH, whereas, if the comparison value is greater than the preset threshold value, the logic values of the first and second flag bits are determined as LOW;
(D2) computing (S80) the sharpness of the corresponding display data using the difference between the data in each row of each of the R and B pixel areas and a preset level value in case the logic value of at least one of the first and second flag bits is HIGH,
wherein the sharpness is obtained by dividing the sum of the differences between the data in each row of each of the R and B pixel areas by 2 and multiplying the level value to the result of the division, and
wherein, if the logic value of at least one of the first and second flag bits is HIGH, the corresponding Rand B pixel areas are detected as a vertical edge for sharpness filtering, and then the number of bits of the data of the corresponding R/B pixel area is extended from M bits to N bits (N>M);
(E) computing the luminance (S100) of the display data by taking the average value of the data corresponding to the odd row of each of the R and B pixel areas;
(F) determining (S110) the gray scale value of output R data by adding the sharpness to the luminance of the R data, and determining the gray scale value of output B data by adding the sharpness to the luminance of the B data; and
(G) inverse-gamma-converting (150) the output R and B data, and combining (S160) the inverse-gamma-converted R and B data and the input G data and then outputting the combined data according to the sub-pixel structure of the display panel.

2. The method of claim 1, further comprising:
if the logic values of the first and second flag bits are all LOW, extending (S70) the number of bits of the data corresponding to the odd row of each of the R and B pixel areas from M bits to N bits without the sharpness filtering between steps D and E; and
restoring (S120) the number of bits of the output R/B data whose gray scale value is determined from N bits to M bits between steps F and G.

3. The method of claim 1, wherein, in the display panel, a first pixel comprising an R sub-pixel and a G sub-pixel and a second pixel comprising a B sub-pixel and a G sub-pixel are arranged in a checkerboard pattern; and
step D is omitted for R and B data columns whose display position is defined between the outermost non-display area of the display panel and a G data column.

4. The method of claim 3, wherein, in step D, the maximum level value is applied to the R and B data columns whose display position faces the outermost non-display area of the display panel with the G data column interposed therebetween.

5. A display device, comprising:
a display panel having as many G sub-pixels as the display resolution of input G data and as many R and B sub-pixels as half the display resolution of input R and B data, respectively;
a gamma conversion unit (11) for gamma-converting the R and B data separated from the input data;
a memory for storing data corresponding to respective even rows of the R and B data adjacent to the loaded odd rows line by line when loading data corresponding to respective odd rows of the gamma-converted R and B data;
a first filtering unit (12) for loading two R data of the even row, along with two R data of the odd row corresponding to a first display position, so as to form a 2x2 R pixel area, loading two B data of the even row, along with two B data of the odd row corresponding to a second display position, so as to form a 2x2 B pixel area, and determining the logic values of first and second flag bits by comparing the value corresponding to the absolute difference between the data in each of the R and B pixel areas column by column to a preset threshold value, and computing the sharpness of the corresponding display data using the difference between the data in each row of each of the R and B pixel areas and a preset level value in case the logic value of at least one of the first and second flag bits is HIGH;
a second filtering unit (13) for computing the luminance of the display data by taking the average value of the data corresponding to the odd row of each of the R and B pixel areas, determining the gray scale value of output R data by adding the sharpness to the luminance of the R data, and determining the gray scale value of output B data by adding the sharpness to the luminance of the B data;
an inverse-gamma-conversion unit (14) for inverse-gamma-converting the output R and B data; and
a data alignment unit (15) for combining the inverse-gamma-converted R and B data and the input G data and then outputting the combined data according to the sub-pixel structure of the display panel,
wherein the sharpness is obtained by dividing the sum of the differences between the data in each row of each of the R and B pixel areas by 2 and multiplying the level value to the result of the division
wherein, if a comparison value between the data in each column is less than the preset threshold value, the first filtering unit determines the logic values of the first and second flag bits as HIGH, whereas, if the comparison value is greater than the preset threshold value, the first filtering unit determines the logic values of the first and second flag bits as LOW, and
wherein, if the logic value of at least one of the first and second flag bits is HIGH, the corresponding Rand B pixel areas are detected as a vertical edge for sharpness filtering.

6. The display device of claim 5, wherein, if the logic values of the first and second flag bits are all LOW, the first filtering unit (12) skips the computation of the sharpness of the corresponding Rand B pixel areas.

7. The display device of claim 5, wherein, in the display panel, a first pixel comprising an R sub-pixel and a G sub-pixel and a second pixel comprising a B sub-pixel and a G sub-pixel are arranged in a checkerboard pattern; and
the first filtering unit (12) skips the computation of the sharpness for R and B data columns whose display position is defined between the outermost non-display area of the display panel and a G data column.

8. The display device of claim 7, wherein the first filtering unit (12) applies the maximum level value to the R and B data columns whose display position faces the outermost non-display area of the display panel with a G data column interposed therebetween.

## Patentansprüche

1. Bildverarbeitungsverfahren, in dem drei Primärfarbdaten eines Eingabe-RGB-Datenformats auf einer Anzeigetafel gemäß einer Unterpixelstruktur der Anzeigetafel wiedergegeben werden, wobei die Anzeigetafel jeweils so viele G-Unterpixel wie die Anzeigeauflösung der eingegebenen G-Daten und so viele R- und B-Unterpixel wie die halbe Anzeigeauflösung der eingegebenen R- und B-Daten besitzt, wobei das Verfahren umfasst:
(A) Trennen (S10) der R- und B-Daten und der G-Daten von den Eingabedaten;
(B) Gamma-Umsetzen (S20) der getrennten R- und B-Daten und Laden (S30) von Daten, die jeweiligen ungeraden Reihen von gamma-umgesetzten R- und B-Daten entsprechen, in ein Register und Speichern von Daten, die jeweiligen geraden Reihen der R- und B-Daten entsprechen, angrenzend an die geladenen ungeraden Reihen;
(C) Laden (S40) von zwei R-Daten der geraden Reihe zusammen mit zwei R-Daten der geraden Reihe, die einer ersten Anzeigeposition entsprechen, um einen 2 × 2-R-Pixelbereich zu bilden, und Laden von zwei B-Daten der geraden Reihe zusammen mit zwei B-Daten der ungeraden Reihe, die einer zweiten Anzeigeposition entsprechen, um einen 2 × 2-B-Pixelbereich zu bilden;
(D1) Bestimmen (S50) der logischen Werte eines ersten und zweiten Markierungsbits durch Vergleichen des Werts, der dem absoluten Unterschied zwischen den Daten in jedem des R- und des B-Pixelbereichs entspricht, Spalte um Spalte, mit einem voreingestellten Schwellenwert,
wobei dann, wenn eine Vergleichswert zwischen den Daten in jeder Spalte kleiner als der voreingestellte Schwellenwert ist, die logischen Werte des ersten und zweiten Markierungsbits als HOCH bestimmt werden, während dann, wenn der Vergleichswert größer als der voreingestellten Schwellenwert ist, die logischen Werte des ersten und zweiten Markierungsbits als TIEF bestimmt werden;
(D2) Berechnen (S80) der Schärfe der entsprechenden Anzeigedaten unter Verwendung des Unterschieds zwischen den Daten in jeder Reihe von jedem des R- und des B-Pixelbereichs und einem voreingestellten Pegelwert in dem Fall, in dem der logische Wert des ersten und/oder des zweiten Markierungsbits HOCH ist,
wobei die Schärfe durch Teilen der Summe der Unterschiede zwischen den Daten in jeder Reihe von jedem des R- und des B-Pixelbereichs durch 2 und Multiplizieren des Pegelwertes mit dem Ergebnis der Division erhalten wird und
wobei dann, wenn der logische Wert des ersten und/oder des zweiten Markierungsbits HOCH ist, der entsprechende R- und der B-Pixelbereich als eine vertikale Kante für das Schärfefiltern detektiert werden und dann die Anzahl der Bits der Daten des entsprechenden R/B-Pixelbereichs von M Bits auf N Bits (N>M) erweitert wird;
(E) Berechnen der Helligkeit (S100) der Anzeigedaten durch Nehmen des Mittelwertes der Daten, die den ungeraden Reihen eines jeden des R- und des B-Pixelbereichs entsprechen;
(F) Bestimmen (S110) des Graustufenwertes der ausgegebenen R-Daten durch Hinzufügen der Schärfe zu der Helligkeit der R-Daten und Bestimmen des Graustufenwertes von ausgegebenen B-Daten durch Hinzufügen der Schärfe zu der Helligkeit der B-Daten; und
(G) Invers-Gamma-Umsetzen (150) der ausgegebenen R- und B-Daten und Vereinigen (S160) der invers-gamma-umgesetzten R- und B-Daten und der eingegebenen G-Daten und dann Ausgeben der vereinigten Daten gemäß der Unterpixelstruktur der Anzeigetafel.

2. Verfahren nach Anspruch 1, das ferner umfasst:
dann, wenn die logischen Werte des ersten und des zweiten Markierungsbits alle TIEF sind, Erweitern (S70) der Anzahl der Bits der Daten, die den ungeraden Reihen eines jeden des R- und des B-Pixelbereichs entsprechen, von M Bits auf N Bits ohne das Schärfefiltern zwischen den Schritten D und E; und
Wiederherstellen (S120) der Anzahl von Bits der ausgegebenen R/B-Daten, deren Graustufenwert aus N Bits bis M Bits zwischen den Schritten F und G bestimmt wird.

3. Verfahren nach Anspruch 1, wobei in der Anzeigetafel ein erstes Pixel, das ein R-Unterpixel und ein G-Unterpixel umfasst, und ein zweites Pixel, das ein B-Unterpixel und ein G-Unterpixel umfasst, in einem Schachbrettmuster angeordnet wird; und
Schritt D für R- und B-Datenspalten ausgelassen wird, deren Anzeigeposition zwischen dem äußersten Nicht-Anzeigebereich der Anzeigetafel und einer G-Datenspalte definiert ist.

4. Verfahren nach Anspruch 3, wobei in Schritt D der maximale Pegelwert auf die Rund B-Datenspalten angewendet wird, deren Anzeigeposition dem äußersten Nicht-Anzeigebereich der Anzeigetafel zugewandt ist, wobei die G-Datenspalten dazwischen eingefügt sind.

5. Anzeigevorrichtung, die umfasst:
eine Anzeigetafel mit jeweils so vielen G-Unterpixeln wie die Anzeigeauflösung von eingegeben G-Daten und so vielen R- und B-Unterpixeln wie die halbe Anzeigeauflösung der eingegebenen R- und B-Daten;
Gamma-Umsetzungseinheit (11) zum Gamma-Umsetzen der von den Eingabedaten getrennten R- und B-Daten;
einen Speicher zum Speichern von Daten, die jeweiligen geraden Reihen der Rund B-Daten entsprechen, angrenzend an die geladenen ungeraden Reihen Zeile um Zeile, wenn Daten geladen werden, die jeweiligen ungeraden Reihen gamma-umgesetzten R- und B-Daten entsprechen;
eine erste Filtereinheit (12) zum Laden von zwei R-Daten der geraden Reihe zusammen mit zwei R-Daten der ungeraden Reihe, die einer ersten Anzeigeposition entsprechen, um einen 2 × 2-R-Pixelbereich zu bilden, Laden von zwei B-Daten der geraden Reihe zusammen mit zwei B-Daten der ungeraden Reihe, die einer zweiten Anzeigeposition entsprechen, um einen 2 × 2-B-Pixelbereich zu bilden, und Bestimmen der logischen Werte eines ersten und zweiten Markierungsbits durch Vergleichen des Werts, der dem absoluten Unterschied zwischen den Daten in jedem der R- und B-Pixelbereiche entspricht, Spalte um Spalte mit einem voreingestellten Schwellenwert und Berechnen der Schärfe der entsprechenden Anzeigedaten unter Verwendung des Unterschieds zwischen den Daten in jeder Reihe von jedem des R- und des B-Pixelbereichs und einem voreingestellten Pegelwert in dem Fall, in dem der logische Wert des ersten und/oder des zweiten Markierungsbits HOCH ist;
eine zweite Filtereinheit (13) zum Berechnen der Helligkeit der Anzeigedaten durch Nehmen des Mittelwertes der Daten, die der ungeraden Reihe eines jeden des Rund B-Pixelbereichs entsprechen, Bestimmen des Graustufenwertes der ausgegebenen R-Daten durch Hinzufügen der Schärfe zu der Helligkeit der R-Daten und Bestimmen des Graustufenwertes von ausgegebenen B-Daten durch Hinzufügen der Schärfe zu der Helligkeit der B-Daten;
eine Einheit für eine inverse Gamma-Umsetzung (14) zum Invers-Gamma-Umsetzen der ausgegebenen R- und B-Daten;
eine Datenausrichtungseinheit (15) zum Vereinigen der invers-gamma-umgesetzten R- und B-Daten und der eingegebenen G-Daten und dann Ausgeben der vereinigten Daten gemäß der Unterpixelstruktur der Anzeigetafel,
wobei die Schärfe durch Teilen der Summe der Unterschiede zwischen den Daten in jeder Reihe eines jeden des R- und B-Pixelbereichs durch 2 und Multiplizieren des Pegelwertes mit dem Ergebnis der Division erhalten wird,
wobei dann, wenn ein Vergleichswert zwischen den Daten in jeder Spalte kleiner als der voreingestellte Schwellenwert ist, die erste Filtereinheit die logischen Werte des ersten und des zweiten Markierungsbits als HOCH bestimmt, während dann, wenn der Vergleichswert größer als der voreingestellte Schwellenwert ist, die erste Filtereinheit die logischen Werte des ersten und des zweiten Markierungsbits als TIEF bestimmt, und
wobei dann, wenn der logische Wert des ersten und/oder des zweiten Markierungsbits HOCH ist, der entsprechende R- und der B-Pixelbereich als eine vertikale Kante für das Schärfefiltern bestimmt werden.

6. Anzeigevorrichtung nach Anspruch 5, wobei dann, wenn die logischen Werte des ersten und des zweiten Markierungsbits alle TIEF sind, die erste Filtereinheit (12) die Berechnung der Schärfe des entsprechenden R- und des B-Pixelbereichs überspringt.

7. Anzeigevorrichtung nach Anspruch 5, wobei in der Anzeigetafel ein erstes Pixel, das ein R-Unterpixel und ein G-Unterpixel umfasst, und ein zweites Pixel, das ein B Unterpixel und ein G-Unterpixel umfasst, in einem Schachbrettmuster angeordnet wird; und
die erste Filtereinheit (12) die Berechnung der Schärfe für R- und B-Datenspalten, deren Anzeigeposition zwischen dem äußersten Nicht-Anzeigebereich der Anzeigetafel und einer G-Datenspalte definiert ist, überspringt.

8. Anzeigevorrichtung nach Anspruch 7, wobei die erste Filtereinheit (12) den maximalen Pegelwert auf die R- und B-Datenspalten anwendet, deren Anzeigeposition dem äußersten Nicht-Anzeigebereich der Anzeigetafel zugewandt ist, wobei eine G-Datenspalte dazwischen eingefügt ist.

## Revendications

1. Procédé de traitement d'images, dans lequel trois données de couleurs primaires d'un format de données RVB d'entrée sont rendues sur un panneau d'affichage selon une structure de sous-pixels du panneau d'affichage, le panneau d'affichage comportant autant de sous-pixels V que la résolution d'affichage des données V d'entrée et autant de sous-pixels R et B que la moitié de la résolution d'affichage respectivement des données R et B d'entrée, le procédé comprenant :
(A) la séparation (S10) des données R et B et des données V des données d'entrée ;
(B) la conversion gamma (S20) des données R et B séparées, et le chargement (S30) des données correspondant à des rangées impaires respectives des données R et B converties par conversion gamma dans un registre, et la mémorisation des données correspondant à des rangées paires respectives des données R et B adjacentes aux rangées impaires chargées ;
(C) le chargement (S40) de deux données R de la rangée paire avec deux données R de la rangée impaire correspondant à une première position d'affichage, de manière à former une zone de 2x2 pixels R, et le chargement de deux données B de la rangée paire avec deux données B de la rangée impaire correspondant à une deuxième position d'affichage, de manière à former une zone de 2x2 pixels B ;
(D1) la détermination (S50) des valeurs logiques de premier et deuxième bits de drapeau en comparant la valeur correspondant à la différence absolue entre les données dans chacune des zones de pixels R et B, colonne par colonne, à une valeur de seuil préréglée,
dans lequel, si une valeur de comparaison entre les données dans chaque colonne est inférieure à la valeur de seuil préréglée, il est déterminé que les valeurs logiques des premier et deuxième bits de drapeau sont HAUTES tandis que, si la valeur de comparaison est supérieure à la valeur de seuil préréglée, il est déterminé que les valeurs logiques des premier et deuxième bits de drapeau sont BASSES ;
(D2) le calcul (S80) de la netteté des données d'affichage correspondantes en utilisant la différence entre les données dans chaque rangée de chacune des zones de pixels R et B et une valeur de niveau préréglée dans le cas où la valeur logique de l'au moins un des premier et deuxième bits de drapeau est HAUTE,
dans lequel la netteté est obtenue en divisant la somme des différences entre les données dans chaque rangée de chacune des zones de pixels R et B par 2 et en multipliant la valeur de niveau par le résultat de la division, et
dans lequel, si la valeur logique d'au moins l'un des premier et deuxième bits de drapeau est HAUTE, il est détecté que les zones de pixels R et B correspondantes sont un bord vertical pour un filtrage de netteté, puis le nombre de bits des données de la zone de pixels R/B correspondante est étendu de M bits à N bits (N>M) ;
(E) le calcul de la luminance (S100) des données d'affichage en prenant la valeur moyenne des données correspondant à la rangée impaire de chacune des zones de pixels R et B ;
(F) la détermination (S110) de la valeur d'échelle de gris des données R de sortie en ajoutant la netteté à la luminance des données R, et la détermination de la valeur d'échelle de gris des données B de sortie en ajoutant la netteté à la luminance des données B ; et
(G) la conversion gamma inverse (150) des données R et B de sortie, et la combinaison (S160) des données R et B converties par conversion gamma inverse et des données G d'entrée puis la sortie des données combinées selon la structure de sous-pixels du panneau d'affichage.

2. Procédé selon la revendication 1, comprenant en outre :
si les valeurs logiques des premier et deuxième bits de drapeau sont toutes BASSES, l'extension (S70) du nombre de bits des données correspondant à la rangée impaire de chacune des zones de pixels R et B de M bits à N bits sans le filtrage de netteté entre les étapes D et E ; et
le rétablissement (S120) du nombre de bits des données R/B de sortie dont la valeur d'échelle de gris est déterminée de N bits à M bits entre les étapes F et G.

3. Procédé selon la revendication 1, dans lequel, dans le panneau d'affichage, un premier pixel comprenant un sous-pixel R et un sous-pixel V et un deuxième pixel comprenant un sous-pixel B et un sous-pixel G sont agencés dans un motif en forme de damier ; et
l'étape D est omise pour les colonnes de données R et B dont la position d'affichage est définie entre la zone de non-affichage la plus extérieure du panneau d'affichage et une colonne de données V.

4. Procédé selon la revendication 3, dans lequel, à l'étape D, la valeur de niveau maximale est appliquée aux colonnes de données R et B dont la position d'affichage fait face à la zone de non-affichage la plus extérieure du panneau d'affichage avec la colonne de données V interposée entre elles.

5. Dispositif d'affichage comprenant :
un panneau d'affichage comportant autant de sous-pixels V que la résolution d'affichage des données V d'entrée et autant de sous-pixels R et B que la moitié de la résolution d'affichage respectivement des données R et B d'entrée ;
une unité de conversion gamma (11) pour effectuer la conversion gamma des données R et B séparées des données d'entrée ;
une mémoire pour effectuer la mémorisation des données correspondant à des rangées paires respectives des données R et B adjacentes aux rangées impaires chargées ligne par ligne lors du chargement de données correspondant à des rangées impaires respectives des données R et B converties par conversion gamma ;
une première unité de filtrage (12) pour effectuer le chargement de deux données R de la rangée paire avec deux données R de la rangée impaire correspondant à une première position d'affichage, de manière à former une zone de 2x2 pixels R, le chargement de deux données B de la rangée paire avec deux données B de la rangée impaire correspondant à une deuxième position d'affichage, de manière à former une zone de 2x2 pixels B, et la détermination des valeurs logiques des premier et deuxième bits de drapeau en comparant la valeur correspondant à la différence absolue entre les données dans chacune des zones de pixels R et B, colonne par colonne, à une valeur de seuil préréglée, et le calcul de la netteté des données d'affichage correspondantes en utilisant la différence entre les données dans chaque rangée de chacune des zones de pixels R et B et une valeur de niveau préréglée dans le cas où la valeur logique de l'au moins un des premier et deuxième bits de drapeau est HAUTE,
une deuxième unité de filtrage (13) pour effectuer le calcul de la luminance des données d'affichage en prenant la valeur moyenne des données correspondant à la rangée impaire de chacune des zones de pixels R et B, la détermination de la valeur d'échelle de gris des données R de sortie en ajoutant la netteté à la luminance des données R, et la détermination de la valeur d'échelle de gris des données B de sortie en ajoutant la netteté à la luminance des données B ;
une unité de conversion gamma inverse (14) pour effectuer la conversion gamma inverse des données R et B de sortie ; et
une unité d'alignement de données (15) pour effectuer la combinaison des données R et B converties par conversion gamma inverse et des données G d'entrée puis la sortie des données combinées selon la structure de sous-pixels du panneau d'affichage,
dans lequel la netteté est obtenue en divisant la somme des différences entre les données dans chaque rangée de chacune des zones de pixels R et B par 2 et en multipliant la valeur de niveau par le résultat de la division,
dans lequel, si une valeur de comparaison entre les données dans chaque colonne est inférieure à la valeur de seuil préréglée, la première unité de filtrage détermine que les valeurs logiques des premier et deuxième bits de drapeau sont HAUTES, tandis que, si la valeur de comparaison est supérieure à la valeur de seuil préréglée, la première unité de filtrage détermine que les valeurs logiques des premier et deuxième bits de drapeau sont BASSES, et
dans lequel, si la valeur logique d'au moins l'un des premier et deuxième bits de drapeau est HAUTE, il est détecté que les zones de pixels R et B correspondantes sont un bord vertical pour un filtrage de netteté.

6. Dispositif d'affichage selon la revendication 5, dans lequel, si les valeurs logiques des premier et deuxième bits de drapeau sont toutes BASSES, la première unité de filtrage (12) saute le calcul de la netteté des zones de pixels R et B correspondantes.

7. Dispositif d'affichage selon la revendication 5, dans lequel, dans le panneau d'affichage, un premier pixel comprenant un sous-pixel R et un sous-pixel V et un deuxième pixel comprenant un sous-pixel B et un sous-pixel G sont agencés dans un motif en forme de damier ; et
la première unité de filtrage (12) saute le calcul de la netteté pour les colonnes de données R et B dont la position d'affichage est définie entre la zone de non-affichage la plus extérieure du panneau d'affichage et une colonne de données V.

8. Dispositif d'affichage selon la revendication 7, dans lequel la première unité de filtrage (12) applique la valeur de niveau maximale aux colonnes de données R et B dont la position d'affichage fait face à la zone de non-affichage la plus extérieure du panneau d'affichage avec une colonne de données V interposée entre elles.
